# EUROPEAN PATENT APPLICATION

(11) **EP 2 055 685 A1**
(43) Date of publication of application: **06.05.2009**
(21) Application number: 07119928.5
(22) Date of filing: 02.11.2007
(51) Int. Cl.: C04B 18/04, C04B 28/02, C04B 28/26

(54) **Method for preparing a structure in a body of water.**

(71) Applicant: Stichting Deltares, 2629 HD Delft (NL)
(72) Inventor: The designation of the inventor has not yet been filed
(74) Representative: Hatzmann, Martin

(57) **Abstract**

The present invention relates to a method for preparing a structure in a body of water, comprising forming a plastic construction mixture comprising (i) sludge or tailing material, (ii) a binder and (iii) a binder initiator, applying the plastic construction mixture to an area, the area being situated underwater, and allowing the applied mixture to harden underwater.

## Description

The present invention relates to a method for preparing a structure in a body of water and to the use of a construction mixture underwater.

US patent 4,804,297 describes a method of formless underwater casting of a cementitious mixture. The method involves the addition of silicate to the water in which a structure bound with cement is to be cast. It is stated that known methods of casting mixtures of cement and silicate do not allow formless casting. In order to allow formless casting underwater this publication provides a method wherein first a silicate solution is placed into at least a portion of a body of water, and then the cementitious mixture is placed in the same volume of water that has been conditioned with silicate.

However, the present inventors have concluded that the need to place a silicate solution in the water wherein the structure is to be cast, makes this method impractical or even unsuitable in a situation wherein the water forms part of a biotope and/or in situations wherein the water is moving. After all, the silicate may be detrimental to the environment, due to its generally strongly alkaline nature. Further, in particular in streaming water it is in practice impossible to contain the silicate into a well-defined part of the body of water wherein the structure is made.

It is an object of the invention to provide a novel method for preparing a structure in a body of water, in particular a method that overcomes one or more drawbacks of the above described methodology.

One or more other objects that may be met will be apparent from the description below.

It has now been found possible to prepare a structure in a body of water making use of a specific mixture comprising a binder and a binder initiator.

Accordingly, the present invention relates to a method for preparing a structure in a body of water, comprising forming a plastic construction mixture comprising (i) sludge or tailing material, (ii) a binder and (iii) a binder initiator, applying the plastic construction mixture to an area, the area being situated underwater, and allowing the applied mixture to harden underwater.

A method according to the invention may in particular be used to manufacture or treat an infrastructural element or a part thereof. In particular, the infrastructural element may be selected from the group of water ways, for instance a river, a canal, a lake, a ditch, a moat, a brook, an aqueduct; underwater embankments; water defense and/or control constructions, for instance a dam, a dike (for instance a longitudinal dike, a compartimentation dike), a weir, a quay, a sluice, a lock, a groyn, a breakwater, a pier; water basins (for instance a collector basin) quarry ponds, e.g. for recovering sand or gravel.

In particular in a water way or basin, a shore or underwater bottom or part thereof may be provided with a structure in accordance with the invention. More in particular, the structure may be provided at a curve in the water way.

In particular of a water defense and/or control construction a underwater slope may be provided with a structure by a method of the invention to strengthen the construction. In particular in a water defense construction, such as a dike, the structure may be used to reduce the waterpermeability of the construction, for instance to reduce or avoid water seepage, to reduce or avoid undermining scouring (underseepage) or the like.

The invention may in particular be used to protect (a part of) the bottom of a water way and/or side(s) of a water way against erosion by water, e.g. caused by a water flow through the water way, and/or against scouring by movements or water vessels.

It is also possible to provide an artificial construction in a body of water or at the shore of a body of water with a structure according to the invention. For instance a piece of art placed in the water may thus be protected against erosion and/or scouring.

In a quarry pond, in particular the slope of the pond may be fully or partially provided with the structure to strengthen the slope.

In an underwater depot, the method of the invention may in particular be applied to strengthen the bottom and/or sides, and/or to reduce water permeability.

The invention may also be employed to create an artificial island in a body of water or to provide a shore.

The inventors have surprisingly found that a plastic mixture comprising the binder (e.g. cement), the binder initiator (e.g. a silicate) and a sludge or tailing material is not only suitable to be applied underwater but also hardens under water, such that a solid structure is obtained. The total curing time may be fine-tuned based on the nature and concentration of the components of the mixture. A substantial hardening within less than 80 hours, less than 48 hours, less than an hour or even within a few minutes is feasible, if desired.

Further, the inventors have found that the plastic mixture may adequately be applied to the area as a homogenous mixture (i.e. without substantial phase separation during the application). It has further been possible to apply the construction mixture as an essentially continuous mass, if desired. This facilitates accurately preparing a structure with a desired geometry, e.g. providing an area with a layer of construction mixture having a highly uniform thickness (for instance varying less than 10 % in thickness). In particular, the plastic mixture used in accordance with the invention usually has an advantageously low gravity-flow, also when applied to a sloped area (i.e. an area at an angle with the horizontal plane). When sloped, the angle of the area to which the mixture may be applied may in particular be at least 5 °, at least 10° or at least °15. The angle may in particular be up to 45 °, up to 35°, up to 30°, or up to 25°.

Based on laboratory experiments, the inventors have further concluded that a method according to the invention can be employed such that it is relatively environmentally friendly. For instance, it is possible to apply the mixture without substantial clouding of the water by the mixture. Further, it is possible to prepare a structure underwater without substantially affecting the pH, the oxygen concentration and/or the electrical conductivity of the body of water, or at least without affecting said parameters to an unacceptable extent.

It is further envisaged that also after hardening the prepared structure has a good dimensional stability, i.e. essentially retains its shape in the absence of external forces. Also, it is envisaged that the structure shows good erosion resistance. It is further envisaged that it has a good mechanical strength. Thus, it is envisaged that the invention offers a method for preparing a durable structure, that may remain functional for several decades.

A method according to the invention is further advantageous in that it can be conveniently be employed without needing a mould, i.e. at allows casting without needing a form defining the structure.

Further, in the absence of pore-forming agents (such as foaming agents and degradable fibres) in suitable concentrations to create an open-cellular structure, the hardened structure usually has a low water permeability or is even essentially water-impermeable. In particular, a water permeability of (the hardened material) may be less than 10⁻⁵ m/s, in particular less than 10⁻⁷ m/s, more in particular 10⁻⁹ or less. A relatively low permeability may in particular be obtained by using a sludge or tailing having a low content in (degradable) organic materials and/or a relatively high content of inorganic particulate material, having a small particles size, such as clay. Permeability can be fine-tuned by modifying the fraction of the construction mixture formed by such materials. It is also possible to apply the material such that channels are provided in the formed structure through which water can flow. E.g. the material can be applied as a generally cylindrical structure, wherein a plurality of cylindrical structures are applied adjacent to each other. In the interstitial space between the cylindrical structures, water can flow.

It is noted that the use of sludge or tailing material in the preparation of construction mixtures is known in the art, in particular from WO 05/75373. However, the construction mixture described therein is fluid and requires a binder retarding agent, whereas the construction mixture used in accordance with the present invention is used plastic, may be free of added binder retarding agent, and is used underwater.

The construction mixture in a method according to the invention is plastic during application underwater, i.e. unlike fluids it generally retains shape when a portion of the mixture is placed on a horizontal surface and it is not subject to any applied force (other than gravity and the counter force of the surface to neutralize gravity), and it demonstrates a non-reversible change of shape in response to an applied force. Herein non-reversible means that the mixture does not change back to it previous shape once the force is cancelled. In particular, the mixture is considered plastic if the shear strength is at least 2 kPa, as measured on a Haake rotoviscosimeter (temperature: 25 °C, spindle: FL10, spindle velocity: 10 rotations per minute). Preferably, the shear strength of the construction mixture during application is at least 5 kPa, at least 7 kPa or at least 8 kPa, in particular when applying the construction mixture to a sloped surface and/or in streaming water. For practical reasons the shear strength is usually less than 30 kPa, in particular less than 20 kPa. For facilitating application of the construction mixture to the area, the shear strength, preferably is 15 kPa or less, more preferably 12 kPa or less, in particular up to about 10 kPa.

The term sludge as used herein in the broadest sense is a dispersion comprising a particulate inorganic mineral material (in particular silica based) and water. The term sludge in particular includes dredged materials. The sludge typically contains a mud as major component. Alternatively or in addition it may comprise peat, silt, clay, sand and/or other granular materials.

The term tailing material as used herein is defined as sludged material obtained from mining-, milling-, grinding processing or other sludged industrial waste.

Unless specified otherwise the term sludge is meant to include sludge, tailing material and dredged material.

The sludge or tailing material usually needs not to be pre-treated before mixing the ingredients. In particular, the sludge or tailing material may be further processed without dewatering, although in case the sludge or tailing material has a relatively high water content, some dewatering may be desired. Alternatively, the amount of binder may be chosen relatively high and/or granular weighting material may be added (e.g. sand, silt, clay or the like), in order to obtain a favourable plasticity and/or specific weight.

In case the sludge or tailing material (e.g. a dredged material) contains undesired macroscopic objects (e.g. bricks, bikes and the like, household equipment, packaging materials), these may be removed from the sludge or tailing material, prior to mixing. For instance, the sludge may suitably be sieved. Objects are preferably at least partially removed if they have a size of about 5 cm (max. diameter) or more.

Optionally, organic pollutants are removed from the sludge, the tailing material or the mixture, preferably by aerating. It is possible though, to use the sludge without a pre-treatment to remove contaminants such as heavy metals, organic compounds such as mineral oils, PCB's (polychlorobiphenyls), PAC's (polyaromatic hydrocarbons) and the like.

In principle, any type of binders for inorganic materials may be used. Particularly suitable are binders comprising calcium oxide. Preferred binders include fly ashes, cements and lime-based binders (such as calcium oxide, magnesium oxide silica, ferric oxide, aluminium oxide). The cement may in particular be selected from CEM I cement (=portlandcement), CEM II composite cement (comprising fly ashes) and CEM III cement (= blast furnace cement). A CEM III cement is in particular advantageous for providing a construction mixture that retains plasticity for a prolonged time.

The ratio binder to sludge or tailing material is chosen to provide desired plasticity properties in the construction mixture. Depending upon the type and amount of binder, the water content and the nature and amount of binder initiator, a relatively low ratio may suffice. The skilled person will know how to obtain a mixture with a suitable plasticity based on common general knowledge, the information described herein and optionally some routine testing. In general, the ratio is at least 125 kg binder per m³ sludge or tailing material. Preferably, the ratio is at least 150 kg binder per m³ sludge or tailing material, at least 175 kg binder per m³ sludge or tailing material or at least 190 kg binder per m³ sludge or tailing material. In order to retain good plasticity for a sufficient time to allow convenient application of the construction mixture, the ratio binder to sludge or tailing material is usually up to 350 kg binder per m³ sludge or tailing material, preferably up to 300 kg binder per m³ sludge or tailing material, or up to 250 kg binder per m³ sludge or tailing material. As a rule of thumb, a relatively high ratio is desired for obtaining a construction mixture with a relatively high plasticity, which may be desirable in particular when applying a mixture to a sloped area, especially a relatively steeply sloped area.

The amount of water in the construction mixture (from the sludge) is usually at least 35 wt.% based upon the total weight of the mixture. For facilitating mixing of the components (in particular sludge/tailing and binder, before adding the initiator), the amount of water is preferably at least about 40 wt. %, more preferably at least about 50 wt. %, in particular at least about 60 wt. % or at least about 70 wt. %.

For practical reasons, the amount of water is usually less than 90 wt. %. Preferably the amount of water is about 85 wt. % or less, more preferably about 80 wt. % or less, in particular about 75 wt. % or less.

In particular when using a sludge having a low water content a plasticizer may be added to facilitate mixing. Examples of suitable plasticizers are lignosulphonates, sulphated melamines and sulphonated naphtalenes.}

In terms of the weight ratio water to binder, the ratio usually is above 1. Preferably, this ratio is in the range of 1.5 to 10, more preferably in the range of 2 to 9.

A binder initiator is preferably added *in situ* (i.e. at the construction site, where the structure is made) after mixing binder and sludge or tailing material, usually just before applying the mixture, e.g. within 10 minutes, in particular within 2 minutes, within one minute or within 30 seconds.

The binder initiator contributes to forming a construction mixture that shows plastic behaviour. The amount of initiator may be chosen within wide limits. The choice of initiator and the amount may be used to fine tune one or more parameters such as the desired plasticity, the desired time to reach such plasticity, and/or the rate at which the material further hardens after application.

Usually, the binder initiator is added in an amount of at least 25 kg/m³ sludge or tailing material, preferably of at least 40 kg/m³ sludge or tailing or at least 60 kg/m³. Usually, the binder initiator added in an amount of up to 250 kg/m³ sludge or tailing material, preferably of up to 200 kg/m³, up to 160 kg/m³ or up to 140 kg/m³.

In principle any binder initiator may be used that enhances binding of the binder. Preferred is a binder initiator selected from the group of water glass and alkaline hydroxides. Particularly preferred hydroxides are sodium hydroxide, potassium hydroxide and sodium aluminates, as these materials generate a high pH, which has been found advantageous to the binding process, in particular when used in combination with a fly ash as binder. A preferred water glass has a SiO₂/Na₂O molar ratio in the range of 1.6 to 4.5. Particularly preferred is a water glass having a SiO₂/Na₂O molar ratio of at least 2.5. Particularly preferred is a water glass having a SiO₂/Na₂O molar ratio of up to 4.0. Good results have in particular be achieved with a water glass having a SiO₂/Na₂O molar ratio of about 3.4.

If desired, one or more optional additives may be mixed with the sludge (before, during or after mixing with the binder and/or the initiator, preferably before mixing with the initiator). In particular one or more additives may be used selected from the group of binder retarding agents, weighting materials, surfactants, fibrous materials. Suitable additives and conditions can be derived, e.g., from WO 05/075373, with the proviso that in accordance with the invention, it is usually preferred to apply the construction mixture as an essentially non-foamed mixture, unless a porous structure is prepared. A non-foamed mixture is considered easier to handle underwater.

Further, it is generally preferred that the density of the plastic construction mixture is more than 1000 kg/m³, in particular at least 1100 kg/m³, more in particular at least 1200 kg/m³, in order to facilitate the application of the mixture to an intended place and maintaining the mixture there. Usually, the density is 2500 kg/m³ or less, in particular 2200 kg/m³ or less, more in particular 2000 kg/m³ or less.

Further, especially in case the hardened structure is intended to reduce water permeability, the construction mixture is usually prepared without adding organic fibres and foaming agent in a concentration that may give rise to an open cellular structure. However, in some specific embodiments a limited water permeability may be desired, e.g. when preparing a structure on the bottom of a water-way. In such case, the construction material may be provided with sufficient foaming agent and organic fibre to obtain sufficient water permeability for the intended purpose. The addition of weighting material may contribute to a favourably high density in such an embodiment.

A binder retarding agent may for instance be selected from the group of polyphosphates, sulphonated naphthalenes and lignosulphonates. A surfactant, may for instance be selected from the group of alkylsulphonates and nitrogen containing surfactants, in particular from sulfohydroxypoly(oxy-1,2-ethandiyl)-C10-C16-alkylether (e.g. sodium salt), cocosalkyldimethylaminoxide and sodiumolefin(C14/C16)sulfonate.

When used, binder retarding agent may for instance be used in a concentration of at least 0.1 wt. % based on the weight of the sludge, e.g. up to 1 wt. %. However, in particular for a method wherein the plastic construction mixture is prepared *in situ,* the construction mixture may be prepared without adding a binder retarding agent or by adding binder retarding agent in a concentration of less than 0.1 wt. % based on the sludge, in particular less than 0.09 wt. % or less than 0.05 wt. %.

The weighting materials may for instance be selected from the group of minerals with specific weight that is higher that the average specific weight of the mixture, and preferably from the group of dolomite, barite, hematite and magnetite.

Optionally a fibrous material is added. For instance, for imparting extra strength, fibres selected from the group consisting of metal fibres (in particular iron/steel), polymeric fibres and glass fibres may be added.

An organic fibrous material for instance wood (in particular wood chips, sawdust), peat dust, wool, reed, straw, flax, hay, other (dried) leave material or polymeric fibres may be used for improved E-modulus. Care should be taken with bio-degradable organic fibres, also in view of an increased water permeability.

The invention will now be illustrated by the following example.

### Example of a laboratory experiment

In a container, a sand body was made with a slope of about 1:3 (height:length), which is a common slope in underwater embankments.

The dimensions were as follows:
● Container length 0.87 m
● Container Width 0.20 m
● Container Height 0.42 m
● Height of sand body 027 m
● Length of sand body 0.75 m
● Water height 0.32 m

A mixture of sludge (dredged material from the Kromme Mijdrecht river, sieved with a sieve having 10 cm mesh size), cement (CEM I 42,5 200 g/l sludge), and Bentocryl (1 ml/l, which is optional) was made. This mixture was pumped to a mixing-tee using a peristaltic pump and mixed with water glass type 070 to provide a plastic construction mixture comprising 100 g/l water glass. This plastic mixture was directly (within a few seconds) applied to the slope underwater, via a short conduit (about 1 m), of which the length is adjusted to the curing rate of the plastic mixture.

The mixture was applied in layers parallel to the slope starting at the bottom of the slope, subsequent layers were applied to slope-upwards, adjacent to a previously applied layer, which layer supported the upper layer. It was found that the sand slope could fully be covered with the plastic construction mixture without noticeable sagging of the mixture. Thus a uniform layer of construction mixture was applied that remained in place and further hardened. During application, no significant clouding was observed.

Further, as indicators for development of the water quality, pH, electrical conductivity and oxygen concentration were monitored. Results are shown in Table 1.

**Table 1: Monitoring water quality**

| Time, from start of the application | pH | conductivity | Oxygen concentration |
|---|---|---|---|
| [min] | [-] | [µS/cm] | [mg/l] |
| Before | 8.85 | 497 | 8,85 |
| 2 | 8.83 | 498 | 9,14 |
| 3.5 | 8.85 | 497 | 8,67 |
| 4.5 | 8.12 | 498 | 8,86 |
| 5.5 | 8.68 | 498 | 8,88 |
| 6.5 | 8.69 | 499 | 8,91 |
| 7 | 8.91 | 501 | 8,60 |

It is shown that over-all no substantial changes in water quality occur.

After about 12 hours the material was removed from the water. After about 24 hours the strength (Torvane, non-drained shear strength) and density was determined. The strength was determined again after about 90 hours. The strength was determined at three positions of the structure: a position originating from the bottom of the slope, a position originating from the middle of the slope and a position originating from the top of the slope. No significant correlation was found between strength and position. The average strength after 24 hours was found to be 217 kPa, the average strength after 90 hours was found to be 253 kPa.

The average density was found to be 1,222 kg/m³, with an upper value of 1,235 kg/m³ and lower value of 1,204 kg/m³, indicating a high uniformity of the density of the structure.

## Claims

1. A method for preparing a structure in a body of water, comprising forming a plastic construction mixture comprising (i) sludge or tailing material, (ii) a binder and (iii) a binder initiator, applying the plastic construction mixture to an area, the area being situated underwater, and allowing the applied mixture to harden underwater.

2. Method according to claim 1, wherein first the sludge or tailing material and the binder are mixed, and thereafter the binder initiator is mixed with the mixture comprising the sludge or tailing material and the binder.

3. Method according to claim 1 or 2, wherein the area is sloped, preferably at an angle in the range of 5-45°, in particular at an angle in the range of 10-35°, more in particular at an angle in the range of 15-30 °.

4. Method according to any of the preceding claims, wherein the density of the plastic construction mixture is at least 1100 kg/m³, preferably 1200-2500 kg/m3.

5. Method according to any of the preceding claims, wherein the shear strength of the plastic mixture during application to the area is in the range of 5-30 kPa, preferably in the range of 7-20 kPa, in particular in the range of 8-15 kPa.

6. Method according to any of the preceding claims, wherein the binder and the sludge or tailing material are mixed in a ratio of at least 125 kg binder per m³ sludge or tailing material, preferably in a ratio of 150-350 kg binder per m³ sludge or tailing material, in particular in a ratio of 175-300 kg binder per m³ sludge or tailing material.

7. Method according to any of the preceding claims, wherein the area forms part of an infrastructural element, in particular an infrastructural element selected from the group of water ways, for instance a river, a canal, a lake, a ditch, a moat, a brook, an aqueduct; underwater embankments; water defense and/or control constructions, for instance a dam, a dike, a weir, a quay, a sluice, a lock, a groyn, a breakwater, a pier; water basins, for instance a collector basin; and quarry ponds.

8. Use of a plastic construction mixture as defined in any of the preceding claims underwater for providing a strengthened structure situated underwater.

9. Use of a plastic construction mixture as defined in any of the claims 1-7 underwater for providing an area situated underwater with reduced waterpermeability.

10. Use of a plastic construction mixture as defined in any of the claims 1-7 underwater for providing an area situated underwater having improved water-erosion and/or scouring resistance.
